# EUROPEAN PATENT SPECIFICATION

(11) **EP 1 254 786 B1**
(45) Date of publication and mention of the grant of the patent: **28.02.2007**
(21) Application number: 02100405.6
(22) Date of filing: 24.04.2002
(51) Int. Cl.: B60C 1/00, C08K 9/02, C08K 5/548, C08L 21/00

(54) **Tire with tread of rubber composition containing carbon black with silicon domains on its surface**
Reifen mit Lauffläche aus einer Elastomerzusammensetzung, die Russ enthält, welcher an der Oberfläche Siliziumbereiche aufweist
Pneu avec bande de roulement à base d'une composition de caoutchouc contenant du noir de carbone qui possède de la silice en surface

(30) Priority: 04.05.2001 US 288928 P
(43) Date of publication of application: 06.11.2002
(73) Proprietor: THE GOODYEAR TIRE & RUBBER COMPANY, Akron, Ohio 44316-0001 (US)
(72) Inventor: Drvol, Charles Edward, Tallmadge, OH 44278 (US); Taylor, Sherman Lee, North Canton, OH 44720 (US); Linster, Tom Dominique, 9370 Gilsdorf (LU); Rodgers, Michael Brendan, Copley, OH 44321 (US); Ozel, Fahri, 8480 Eischen (LU)
(74) Representative: Kutsch, Bernd

(56) References cited:
- EP-A- 0 711 805
- EP-A- 0 896 978
- EP-A- 1 061 097
- EP-A- 1 085 048

## Description

A tire is provided having a circumferential tread of a cis 1,4-polyisoprene rubber based rubber composition reinforced with a carbon black/silica composite, wherein said carbon black/silica composite is a treated carbon black having silicon-containing domains, namely domains of silica, primarily on the surface of the carbon black, where said silica domains contain hydroxyl groups on their surface, wherein said silica domains cover at least 50 percent of the carbon black surface, and where said rubber composition contains a coupling agent as bis (3-triethoxysilylpropyl) polysulfide having an average of from 2 to 2.6 connecting sulfur atoms in its polysulfidic bridge, exclusive of a bis (3-trialkoxysilylalkyl) polysulfide having an average of greater than 2.6 sulfur atoms in its polysulfidic bridge; wherein said rubber composition contains from zero to a maximum of 15 phr of unmodified carbon black and wherein said rubber composition contains from zero to a maximum of 10 phr of precipitated silica and exclusive of any other carbon black and exclusive of any other silica.

### Background of the Invention

Tires are typically prepared of treads of elastomer based rubber compositions which are conventionally carbon black reinforced. Sometimes tire tread rubber compositions may also be reinforced with silica by utilizing a combination of individual silica and carbon black particles. Typically the silica is a precipitated silica.

Often coupling agents are used with precipitated silica to assist in its reinforcement of elastomers with which the silica is mixed. Utilization of silica couplers for such purpose is well known to those skilled in such art.

Historically, treated carbon black, particularly silicon treated carbon black, has been suggested for use as reinforcement of various diene-based elastomer compositions for tire treads. Historically, such treated carbon black has been a carbon black co-fumed with silica to create a carbon black composite which contains silica domains primarily on the surface of the carbon black. For example, see US-A- 6,172,137; 6,160,047; 6,090,880 and 6,028,137.

In the description of this invention, the term "phr" where used herein, and according to conventional practice, refers to "parts of a respective material per 100 parts by weight of rubber, or elastomer".

In the description of this invention, the terms "rubber" and "elastomer" if used herein, may be used interchangeably, unless otherwise prescribed. The terms "rubber composition", "compounded rubber" and "rubber compound", if used herein, are used interchangeably to refer to "rubber which has been blended or mixed with various ingredients and materials" and such terms are well known to those having skill in the rubber mixing or rubber compounding art.

### Summary and Practice of the Invention

In accordance with this invention, a tire is provided having a circumferential tread of a rubber composition which comprises, based upon parts by weight per 100 parts by weight rubber (phr):
(A) from 70 to 95 phr of cis 1,4-polyisoprene natural rubber and, correspondingly from 5 to 30 phr of cis 1,4-polybutadiene, wherein said elastomers are exclusive of functionalized elastomers and are exclusive of coupled elastomers;
(B) 30 to 110, alternatively 30 to 90, phr of reinforcing filler composed of a carbon black/silica composite comprised of carbon black which contains silicon-containing domains primarily on its surface, wherein said domains are comprised of silica, wherein said domains comprise at least 10 weight percent of said carbon black/silica composite, wherein at least 50, and in a range of 50 to 65, percent of the surface of said carbon black is covered by said domains and wherein said silica on the surface of said carbon black contain hydroxyl groups (e.g. silanol groups) on their surfaces; and
(C) a coupling agent as bis(3-triethoxysilylpropyl) polysulfide which contains an average of from 2 to 2.6 sulfur atoms in its polysulfidic bridge,
wherein said coupling agent is exclusive of bis(3-alkoxysilylalkyl) polysulfide having an average of greater than 2.6, and particularly an average of greater than 3.5, sulfur atoms in its polysulfidic bridge;
wherein said rubber composition contains from zero to a maximum of 15 phr of carbon black (untreated carbon black);
wherein said rubber composition contains from zero to a maximum of 10, preferably zero, phr of precipitated silica and is exclusive of all other silicas.

The carbon black/silica composite for use in this invention may be prepared by
(A) co-fuming carbon black with silicon-containing material, (e.g. silica) at an elevated temperature in a manner to provide a composite of carbon black with integral discrete silicon-containing material (e.g. silica) entities, or domains, primarily on the outer surface of the carbon or by
(B) co-precipitating carbon black and silica such as, for example, from a dispersion of carbon black in sodium silicate, to provide integral silica entities, or domains, on the outer surface of the carbon black.

In practice, it is considered herein that it is required that at least 50 percent of the surface of said carbon black is covered by said silica domains in order that sufficient hydroxyl groups are made available to react with the ethoxy groups of the specified coupling agent to more effectively couple the carton black/silica composite to the elastomers of the rubber composition. It is also required that maximum of 65 percent of the carbon black surface is so-covered in order that at least 35 percent of the carbon black surface remains available to act as a conventional carbon black reinforcement for the rubber composition.

In practice, the carbon black/silica composite used in this invention is exclusive of functionalized carbon blacks, other than the aforesaid inherently present hydroxyl groups associated with the silica domains on the surface of the carbon black

In practice, the tread rubber composition is exclusive of any functionalized, silica other than said carbon black/silica composite.

Preferably, the carbon black/silica composite is prepared by co-fuming carbon black and a silicon-containing material (e.g. silica) together in order that the silica domains are integral with the surface of the carbon black to form a significant attachment for the hydroxyl groups of the silica and thereby enhance its coupling ability between the carbon black/silica composite and elastomers..

It is contemplated that the silica entities, or domains, on the surface of the carbon black of the carbon black composite are integral with the carbon black in a sense of being an actual part of the carbon black composite as compared to simple mixtures of carbon black and silica.

It is to be appreciated that the silica domains on the carbon black surface contain hydroxyl groups (e.g. silanol groups) on the surface thereof. Such hydroxyl groups are intended to be conventionally reactive with the aforesaid coupling agent.

Significantly, the silica coupler is required to be a bis(3-triethoxysilylpropyl) polysulfide which contains an average of only 2 to 2.6 sulfur atoms in its polysulfidic bridge. This is intended to exclude such organosilane polysulfides which contains an average greater than 2.6 sulfur atoms in their polysulfidic bridge such as, for example tetrasulfides commercially available as Si69, a trademark of Degussa A.G. which is understood to have an average of from 3.5 to 4 connecting sulfur atoms in its polysulfidic bridge.

This is because with the more limited connecting sulfur atoms (a maximum average of 2.6 connecting sulfur atoms) in the coupling agent required by this invention, the bonds between the sulfur are relatively stronger and therefore having a far less tendency to form, or release, free sulfur in the rubber mixture as it is being processed at elevated temperatures as compared to similar organosilane polysulfides which contain an average of at least 3.5 connecting sulfur atoms in their polysulfidic bridges . The excess free sulfur is unwanted herein as it may tend to prematurely interact with double bonds contained in the diene elastomers, namely the said cis 1,4-polyisoprene natural rubber and cis 1,4-polybutadiene rubber during the mixing process and therefore to unnecessarily, and inappropriately prematurely increase the viscosity of the rubber composition during the mixing process and is considered herein to impair an efficient mixing and creation of a good dispersion of the carbon black/silica reinforcing filler within the rubber composition.

In the practice of this invention, the tread rubber composition is desired to be limited to cis 1,4-polyisoprene natural rubber with a minor amount of cis 1,4-polybutadiene rubber because the primary intended use for the tire is a truck tire where it is desired that the rubber composition has a desired combination of resistance to tear, ultimate tensile strength and ultimate elongation. It is considered herein that the natural rubber contributes to the tear strength and the polybutadiene contributes to abrasion resistance and low hysteresis (100°C rebound) thereby promoting low heat build up during working conditions for the tire tread.

In particular, a combination of the following properties are required for the tire tread rubber composition of this invention as illustrated in the following Table A.

**Table A**

| | |
|---|---|
| Ultimate tensile strength¹ | at least 22 MPa |
| Ultimate elongation¹ | at least 500 percent |
| Rebound (100°C)² | at least 65 percent |

| | |
|---|---|
| ¹ ASTM D412 | |
| ² ASTM D1054 | |

It is also preferred that the rubber composition have a peel adhesion (95°C) of at least 34 N/mm. Peel adhesion is a measure of tear strength value for Sample A. Such test is conducted for peel adhesion of the Sample to itself. A description of such peel adhesion test may be found in US-A- 5,310,921 and ASTM D4393 test (except that a sample width of 1.3 cm is used and a clear Mylar plastic window of a 5 mm width is inserted in the test sample used).

The tread rubber composition itself can also be provided as being a sulfur cured composition through vulcanization of the uncured tread as a component of the tire itself in a manner well known to those having skill in such art, usually by curing under conditions of elevated temperature and pressure for a suitable period of time.

The curatives for sulfur curing the rubber composition are curatives conventionally used for sulfur curable elastomers which typically include sulfur and one or more appropriate cure accelerators and sometimes also a retarder. Such curatives and use thereof for sulfur curable elastomer compositions are well known to those skilled in the art.

Sequential mixing processes for preparing sulfur curable rubber compositions in which elastomers and associated ingredients exclusive of curatives are first mixed in one or more sequential steps, usually called a "non-productive mixing step(s)" followed by a final mixing step for adding curatives, usually called a "productive mixing step", are also well known to those skilled in the art.

It is to be appreciated that the coupling agent, if in a liquid form, might be used in conjunction with a carbon black carrier, namely, pre-mixed with a carbon black prior to the addition to the rubber composition, and such carbon black is usually to be included in the amount of carbon black accounted for in the rubber composition formulation.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

In the preparation of the rubber composition typical amounts of tackifier resins, if used, comprise 0.5 to 10 phr, usually 1 to 5 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others such as, for example, those disclosed in The Vanderbilt Rubber Handbook (1978), Pages 344 through 346. Typical amounts of antiozonants comprise 1 to 5 phr.

Typical amounts of fatty acids, if used, which can include stearic acid, palmitic acid, linoleic acid or mixtures of one or more fatty acids, can comprise 0.5 to 5 phr.

Often stearic acid is used in a relatively impure state and is commonly referred to in the rubber compounding practice as "stearic acid" and is so referred to in the description and practice of this invention.

Typical amounts of zinc oxide comprise 1 to 5 phr. Typical amounts of waxes comprise 1 to 5 phr. Often microcrystalline waxes are used. Typical amounts of peptizers, if used, comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to 8 phr, with a range of from 1 to 2.5, sometimes from 1 to 2, being preferred.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4, preferably 0.8 to 2, phr. In another embodiment, combinations of a primary and a secondary accelerator might be used with the secondary accelerator being used in amounts of 0.05 to 3 phr in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The presence and relative amounts of the above ingredients, other than the carbon black/silica composite and specified coupling agent are not considered to be the primary subject of this invention which is more primarily directed to the use of the aforesaid carbon black/silica composite, and associated specified coupling agent for the reinforcement of tire tread rubber composition comprised of cis 1,4-polyisoprene natural rubber and cis 1,4-polybutadiene rubber.

The ingredients are typically mixed in at least two stages, namely, at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s). The rubber, carbon black and coupling agent if used, are mixed in one or more non-productive mix stages. The terms "non-productive" and "productive" mix stages are well known to those having skill in the rubber mixing art.

In at least one of the non-productive (NP) mixing stages, the materials are thermomechanically mixed and the mixing temperature is allowed to reach a temperature of, for example, between 120°C and 180°C, usually from 150°C to 175°C.

As hereinbefore discussed the rubber composition of this invention is used for tire treads, particularly truck tire treads, designed to be used under relatively heavy working conditions on and off of paved roadways where heat build up and cut and chip resistance are important considerations. Such tires can be built, shaped, molded and cured by various methods which are known and will be readily apparent to those having skill in such art.

The invention may be better understood by reference to the following examples in which the parts and percentages are by weight unless otherwise indicated.

### EXAMPLE I

This Example is provided as an example of a contemplated practice of this invention.

A rubber composition composed of cis 1,4-polyisoprene natural rubber and cis 1,4-polybutadiene rubber was prepared and identified herein as Sample A.

For Sample A, a carbon black/silica composite is used, together with a specified coupling agent for which the composite was composed of carbon black which contained silicon-containing (e.g. silica) domains primarily on its surface, and covering at least 50 percent of the surface of the carbon black, for which the silica contained hydroxyl groups on its surface, and for which the composite was understood to have been prepared by co-fuming carbon black and silica at an elevated temperature to from the carbon black/silica composite.

The thermomechanical mixing in this Example is accomplished by thermomechanically working and mixing, in at least two sequential mixing steps, a mixture comprised of the said two rubbers, carbon black/silica composite, together with the specified coupling agent, all in the absence of sulfur curatives and sulfur cure accelerators
(A) to a maximum temperature of 170°C and for a duration of time, upon reaching said maximum temperature, of 5 minutes, followed by
(B) a final mixing step in which sulfur curatives and cure accelerators are mixed with said mixture for about 1 minute to a temperature of about 100°C; whereas the rubber mixture is cooled to a temperature below 35°C between each of the aforesaid mixing stages.

The rubber composition was extruded to form an unvulcanized, shaped tread strip, the tread strip built onto an uncured tire carcass to form an assembly thereof and the resulting assembly molded and cured at an elevated pressure and temperature of about 150°C to form a tire of size 11R24.5.

Ingredients for Sample A are illustrated in the following Table 1 in terms of parts by weight per 100 parts by weight of elastomers

**Table 1**

| Materials | Sample A |
|---|---|
| Non-Productive Mixing Stage(s) | |
| Cis 1,4-polyisoprene natural rubber | 90 |
| Cis 1,4-polybutadiene rubber¹ | 10 |
| Carbon black/silica composite² | 50 |
| Coupling agent³ | 4 |
| Zinc oxide | 3.5 |
| Stearic acid | 2 |

| Productive Mixing Stage | |
|---|---|
| Sulfur | 1 |
| Accelerator(s)⁴ | 2 |

| | |
|---|---|
| ¹ Cis 1,4-polybutadiene obtained as Budene 1207 from The Goodyear Tire & Rubber Company | |
| ² Composite containing about 10 weight percent silicon, based upon the carbon black, primarily located on the surface of carbon back prepared by co-fuming carbon black and silica and obtained from Cabot Corporation, Inc. | |
| ³ Bis(3-triethoxysilylpropyl) polysulfide and carbon black composite in a 50/50 weight ratio, therefore a 50 percent active composite, obtained as X266S from Degussa AG | |
| ⁴ Of the sulfenamide type | |

Results of various physical properties of Sample A are reported in the following Table 2.

**Table 2**

| Properties | Sample A |
|---|---|
| Tensile strength (MPa) | 24 |
| Elongation (%) | 517 |
| Rebound (100°C), percent | 67.7 |
| Hardness (23°C), Shore A | 61.8 |
| Peel adhesion (95°C), N/mm | 36.8 |
| Abrasion resistance, DIN 53516 (cm³ loss) | 127 |

From Table 2 it can be seen that the combination of tensile strength, elongation, and rebound of Sample A meet the required physical property specification presented in Table A.

It is considered that the peel adhesion for Sample A is within acceptable limits when taken in combination with the advantageous increased tensile, elongation and rebound properties.

The combination of these properties is considered herein to be important where a tire tread having good cut and chip resistance together with a significantly lower rolling resistance (higher 100°C rebound), leading to a predictive better fuel economy for an associated vehicle, and significantly lower running temperature (higher 100°C rebound) leading to a tire with greater predictive durability, is desired.

It is also considered that Sample A exhibited acceptable resistance to abrasion, a considered beneficial property for a tire tread which can lead to a predictive reduced rate of treadwear and therefore a predictive longer wearing tread.

## Claims

1. A tire having a circumferential tread of a rubber composition which comprises, based upon parts by weight per 100 parts by weight rubber (phr):
(A) from 70 to 95 phr of cis 1,4-polyisoprene natural rubber and, correspondingly from 5 to 30 phr of cis 1,4-polybutadiene, wherein said elastomers are exclusive of functionalized elastomers and are exclusive of coupled elastomers;
(B) 30 to 110 phr of reinforcing filler composed of a carbon black/silica composite comprised of carbon black which contains silicon-containing domains primarily on its surface, wherein said domains are comprised of silica, wherein said domains comprise at least 10 weight percent of said carbon black/silica composite, wherein 50 to 65 percent of the surface of said carbon black is covered by said domains and wherein said silica on the surface of said carbon black contain hydroxyl groups (e.g. silanol groups) on their surfaces; and
(C) a coupling agent as bis(3-triethoxysilylpropyl) polysulfide which contains an average of from 2 to 2.6 sulfur atoms in its polysulfidic bridge,
wherein said coupling agent is exclusive of bis(3-alkoxysilylalkyl) polysulfide having an average of greater than 3.5 sulfur atoms in its polysulfidic bridge;
wherein said rubber composition contains from zero to a maximum of 15 phr of carbon black (untreated carbon black);
wherein said rubber composition contains from zero to a maximum of 10 phr of precipitated silica and is exclusive of all other silicas.

2. The tire of claim 1 wherein said carbon black/silica composite is prepared by
(A) co-fuming carbon black with silicon-containing material, (e.g. silica) at an elevated temperature in a manner to provide a composite of carbon black with integral discrete silicon-containing material (e.g. silica) entities, or domains, primarily on the outer surface of the carbon, wherein
(1) for said carbon black/silica composite, at least 35 percent of the carbon black surface remains available to act as a conventional carbon black reinforcement for the rubber composition; and
(2) said carbon black/silica composite is exclusive of functionalized carbon blacks, other than the aforesaid inherently present hydroxyl groups associated with the silica domains on the surface of the carbon black; or by
(B) co-precipitating carbon black and silica, from a dispersion of carbon black in sodium silicate, to provide integral silica entities, or domains, on the outer surface of the carbon black.

3. The tire of any of the preceding claims wherein said rubber composition is exclusive of any silica other than said carbon black/silica composite.

4. The tire of claim 1 or 2 wherein said rubber composition is exclusive of any functionalized silica other than said carbon black/silica composite.

5. The tire of claim 1 where said carbon black/silica composite is prepared by co-fuming carbon black and a silicon-containing material to form said composite having domains of silicon-containing material primarily on the surface of the carbon black comprised of silica having hydroxyl groups on its surface, wherein said rubber composition is exclusive of functionalized carbon blacks, other than the aforesaid inherently present hydroxyl groups associated with the silica domains on the surface of the carbon black.

6. The tire of claim 5 wherein said rubber composition is exclusive of any functionalized silica other than said carbon black/silica composite.

## Patentansprüche

1. Ein Reifen, der eine umfangsgerichtete Lauffläche aus einer Kautschukzusammensetzung aufweist, welche, auf Basis von Teilen pro Gewicht pro 100 Gewichtsteile Kautschuk (ThK) umfasst :
(A) 70 bis 95 ThK cis-1,4-Polyisopren-Naturkautschuk und entsprechend 5 bis 30 ThK cis-1,4-Polybutadien, wobei besagte Elastomere unter Ausschluss funktionalisierter Elastomere sind und unter Ausschluss gekoppelter Elastomere sind ;
(B) 30 bis 110 ThK Verstärkungsfüllstoff, zusammengesetzt aus einem Carbon Black-/Silika-Kompositmaterial, aufweisend Carbon Black, das siliciumhaltige Bereiche in erster Linie an seiner Oberfläche enthält, wobei besagte Bereiche Silika aufweisen, wobei besagte Bereiche wenigstens 10 Gewichtsprozent besagten Carbon Black-/Silika-Kompositmaterials enthalten, wobei 50 bis 65 Prozent der Oberfläche besagten Carbon Blacks von besagten Bereichen bedeckt ist und wobei besagte Silikas an der Oberfläche besagten Carbon Blacks Hydroxylgruppen (z.B. Silanolgruppen) an ihren Oberflächen enthalten ; und
(C) ein Kopplungsmittel wie Bis(3-triethoxysilylpropyl)polysulfid, das einen Durchschnitt von 2 bis 2,6 Schwefelatomen in seiner Polysulfidbrücke enthält, wobei besagtes Kopplungsmittel unter Ausschluss von Bis(3-alkoxysilylalkyl)polysulfid mit einem Durchschnitt von höher als 3,5 Schwefelatomen in seiner Polysulfidbrücke ist ;
wobei besagte Kautschukzusammensetzung null bis zu einem Maximum von 15 ThK Carbon Black (unbehandeltes Carbon Black) enthält ;
wobei besagte Kautschukzusammensetzung null bis zu einem Maximum von 10 ThK ausgefälltes Silika enthält und unter Ausschluss aller anderen Silikas ist.

2. Der Reifen von Anspruch 1, wobei besagtes Carbon Black-/Silika-Kompositmaterial hergestellt wird durch
(A) Co-Abrauchen von Carbon Black mit siliciumhaltigem Material (z.B. Silika) auf einer erhöhten Temperatur, auf eine Weise, um ein Kompositmaterial von Carbon Black mit integralen diskreten siliciumhaltigen Material (z.B. Silika)-Entitäten, oder -Bereichen, zu verschaffen, in erster Linie an der Außenfläche des Kohlenstoffs, wobei
(1) für besagtes Carbon Black-/Silika-Kompositmaterial wenigstens 35 Prozent der Carbon Black-Oberfläche verfügbar bleibt, um als eine herkömmliche Carbon Black-Verstärkung für die Kautschukzusammensetzung zu wirken ; und
(2) besagtes Carbon Black-/Silika-Kompositmaterial unter Ausschluss anderer funktionalisierter Carbon Blacks als der vorgenannten, inhärent vorhandenen Hydroxylgruppen, die den Silikabereichen an der Oberfläche des Carbon Black zugeordnet sind, ist ; oder durch
(B) Co-Ausfällen von Carbon Black und Silika aus einer Dispersion von Carbon Black in Natriumsilikat, um integrale Silika-Entitäten oder -Bereiche an der Außenfläche des Carbon Blacks zu verschaffen.

3. Der Reifen von einem der vorhergehenden Ansprüche, wobei besagte Kautschukzusammensetzung unter Ausschluss jedes anderen Silikas als besagten Carbon Black-/Silika-Kompositmaterials ist.

4. Der Reifen von Anspruch 1 oder 2, wobei besagte Kautschukzusammensetzung unter Ausschluss jedes anderen funktionalisierten Silikas als besagten Carbon Black-/Silika-Kompositmaterials ist.

5. Der Reifen von Anspruch 1, wobei besagtes Carbon Black-/Silika-Kompositmaterial durch Co-Abrauchen von Carbon Black und einem siliciumhaltigen Material hergestellt wird, um besagte Kompositmaterialien zu bilden, die Bereiche von siliciumhaltigem Material in erster Linie an der Oberfläche des Carbon Blacks haben, aufweisend Silika mit Hydroxylgruppen an seiner Oberfläche, wobei besagte Kautschukzusammensetzung unter Ausschluss anderer funktionalisierter Carbon Blacks als der vorgenannten, inhärent vorhandenen Hydroxylgruppen ist, die den Silikabereichen an der Oberfläche des Carbon Black zugeordnet sind.

6. Der Reifen von Anspruch 5, wobei besagte Kautschukzusammensetzung unter Ausschluss jedes anderen funktionalisierten Silikas als des besagten Carbon Black-/Silika-Kompositmaterials ist.

## Revendications

1. Bandage pneumatique possédant une bande de roulement circonférentielle d'une composition de caoutchouc qui comprend, basées sur des parties en poids par 100 parties en poids de caoutchouc (phr) :
(A) à concurrence de 70 à 95 phr, du caoutchouc naturel de cis 1,4-polyisoprène et de manière correspondante, à concurrence de 5 à 30 phr, du cis 1,4-polybutadiène, lesdits élastomères ne contenant pas d'élastomères fonctionnalisés et ne contenant pas d'élastomères couplés ;
(B) à concurrence de 30 à 110 phr, une matière de charge de renforcement composée d'un composite noir de carbone/silice comprenant du noir de carbone qui contient des domaines contenant du silicium, principalement à sa surface, lesdits domaines comprenant de la silice, lesdits domaines comprenant ledit composite noir de carbone/silice à concurrence d'au moins 10 % en poids, lesdits domaines recouvrant la surface dudit noir de carbone à concurrence de 50 à 65 % et ladite silice, sur la surface dudit noir de carbone, contenant des groupes hydroxyle (par exemple des groupes silanol) sur leur surface ; et
(C) un agent de couplage sous la forme du bis (3-triéthoxysilylpropyl) polysulfure qui contient en moyenne de 2 à 2,6 atomes de soufre dans son pont polysulfure, ledit agent de couplage, qui ne contient pas de bis (3-alcoxysilylalkyl) polysulfure, possédant en moyenne plus de 3,5 atomes de soufre dans son pont polysulfure ;
ladite composition de caoutchouc contenant du noir de carbone (du noir de carbone non traité) à concurrence de zéro à un maximum de 15 phr ;
ladite composition de caoutchouc contenant de la silice précipitée à concurrence de zéro à un maximum de 10 phr ne contient aucune autre silice.

2. Bandage pneumatique selon la revendication 1, dans lequel on prépare ledit composite noir de carbone/silice
(A) en procédant à un fumage conjoint de noir de carbone avec une matière contenant du silicium (par exemple de la silice) à une température élevée de façon à obtenir un composite de noir de carbone avec des unités solidaires discrètes ou des domaines d'une matière contenant du silicium (par exemple de la silice), principalement sur la surface externe du noir de carbone,
(1) pour ledit composite noir de carbone/silice, au moins 35 % de la surface du noir de carbone restent disponibles pour faire office de renforcement conventionnel à base de noir de carbone pour la composition de caoutchouc ; et
(2) ledit composite de noir de carbone/silice ne contient aucun autre noir de carbone fonctionnalisé, en dehors des groupes hydroxyle susmentionnés présents par inhérence, associés aux domaines de la silice sur la surface du noir de carbone ; ou bien
(B) en procédant à une précipitation conjointe de noir de carbone et de silice, à partir d'une dispersion de noir de carbone dans du silicate de sodium, pour obtenir des entités solidaires ou des domaines de silice, sur la surface externe du noir de carbone.

3. Bandage pneumatique selon l'une quelconque des revendications précédentes, dans lequel ladite composition de caoutchouc ne contient aucune autre silice en dehors dudit composite noir de carbone/silice.

4. Bandage pneumatique selon la revendication 1 ou 2, dans lequel ladite composition de caoutchouc ne contient aucune silice fonctionnalisée en dehors dudit composite de noir de carbone/silice.

5. Bandage pneumatique selon la revendication 1, dans lequel on prépare ledit composite noir de carbone/silice en procédant à un fumage conjoint de noir de carbone avec une matière contenant du silicium pour former ledit composite possédant des domaines d'une matière contenant du silicium principalement à la surface du noir de carbone comprenant de la silice et contenant des groupes hydroxyle à sa surface, ladite composition de caoutchouc ne contenant aucun autre noir de carbone fonctionnalisé en dehors des groupes hydroxyle indiqués ci-dessus, présents par inhérence, associés aux domaines de silice à la surface du noir de carbone.

6. Bandage pneumatique selon la revendication 5, dans lequel ladite composition de caoutchouc ne contient aucune autre silice fonctionnalisée en dehors dudit composite noir de carbone/silice.
